# EUROPÄISCHE PATENTSCHRIFT

(11) **EP 3 423 330 B1**
(45) Veröffentlichungstag und Bekanntmachung des Hinweises auf die Patenterteilung: **15.12.2021**
(21) Anmeldenummer: 17715087.7
(22) Anmeldetag: 29.03.2017
(51) Int. Cl.: B61L 23/04, B61L 27/00, B61K 9/08, B61K 9/10, B61L 27/04

(54) **VERFAHREN UND ANORDNUNG ZUM ERKENNEN VON STÖRUNGEN AN EINEM SCHIENENSTRANG**
METHOD AND ARRANGEMENT FOR DETECTING FAULTS ON A RAIL SECTION
PROCÉDÉ ET SYSTÈME POUR IDENTIFIER DES PERTURBATIONS SUR UNE FILE DE TRAINS

(30) Priorität: 26.04.2016 DE 102016207079
(43) Veröffentlichungstag der Anmeldung: 09.01.2019
(73) Patentinhaber: Siemens Mobility GmbH, 81739 München (DE)
(72) Erfinder: HAMMERL, Malte, 38106 Braunschweig (DE)
(86) Internationale Anmeldenummer: PCT/EP2017/057394
(87) Internationale Veröffentlichungsnummer: WO 2017/186442

(56) Entgegenhaltungen:
- DE-A1- 10 022 684
- DE-A1- 19 957 587
- DE-A1-102013 219 763

## Beschreibung

Es ist aus der Dissertation von Bohdana Slovak, "Fahrzeugseitige Schienenbrucherkennung, Nachweis der prinzipiellen Machbarkeit mittels Auswertung von Beschleunigungssignalen am Achslager eines U-Bahnfahrzeugs", 2012 ein Verfahren bekannt, bei dem an Achslagern von Radsätzen zur Schienenbrucherkennung Beschleunigungssensoren angebracht sind, die vertikale Schwingungen bei einer Fahrt über einen Schienenbruch erfassen. Außerdem wurde die Fahrgeschwindigkeit des Zuges gemessen. Im Einzelnen wurde dazu bei den Versuchsfahrten ein normaler Triebwagen eines führerlosen Zuges verwendet, der mit den Beschleunigungssensoren und einer Messelektronik versehen ist.

Außerdem ist aus der Druckschrift DE 100 22 684 A1 ein Sicherheitssystem für Schienenfahrzeuge und Schienenwege bekannt, bei dem eine akustische Auswertung der beim Betrieb entstehenden Geräusche erfolgt. Dabei kann ein Überblick über den Zustand des Fahrweges erhalten werden, aufbauend auf welchen sich dann betriebsabwicklungs- und sicherheitsrelevante Entscheidungen für eine optimierte Instandhaltung des Fahrweges ableiten lassen.

Der Erfindung liegt die Aufgabe zugrunde, ein Verfahren zum Erkennen von Störungen an einem Schienenstrang anzugeben, mit dem in einem automatischen Zugverkehrssystem ein zuverlässiges Erkennen von Störungen verschiedener Art an einem Schienenstrang mit vergleichsweise geringem Aufwand ermöglicht ist.

Zur Lösung dieser Aufgabe dient erfindungsgemäß ein Verfahren zum Erkennen von Störungen an einem Schienenstrang in einem automatischen Zugverkehrssystem mit einer Operationszentrale und führerlos betriebenen Zügen mittels einer Inspektionseinrichtung in mindestens einem weiteren Zug, zu welcher eine außen an dem weiteren Zug angebrachte Messeinheit gehört, welche eine Messung ausführt und ein Messergebnis ermittelt. Dabei wird dem als der mindestens eine weitere Zug ein führerlos betriebener Inspektionszug mit der Inspektionseinrichtung sowie mit einer bordseitigen Zugbetriebseinrichtung mit einer automatischen Fahrbetriebseinheit und einer automatischen Zugsicherungseinheit verwendet, dessen Fahrzeugbewegungen, welche in direktem Zusammenhang mit der Messung stehen, in Abhängigkeit vom Messergebnis verändert werden, und es wird über ein Interface eine Kommunikationsverbindung zwischen der automatischen Zugeinrichtung und der Inspektionseinrichtung betrieben, wobei über die Kommunikationsverbindung Aktivierungssignale für die Inspektionseinrichtung, Statussignale und Orts- und Geschwindigkeitssignale ausgetauscht werden und wobei die Operationszentrale bei einer erkannten Störung den Inspektionszug mit Kommandos erneut zur Position der erkannten Störung schickt und eine neue Messung veranlasst.

Ein wesentlicher Vorteil des erfindungsgemäßen Verfahrens wird darin gesehen, dass ein führerlos betriebener Inspektionszug verwendet wird, mit dem mechanische Störungen an einem Schienenstrang ohne Personalkosten für den Inspektionszug erfasst werden können. Dabei sind die Kosten für den Inspektionszug an sich vergleichsweise niedrig, weil auf eine bordseitige Zugbetriebseinrichtung mit einer automatischen Fahrbetriebseinheit und einer automatischen Zugsicherungseinheit zurück gegriffen werden kann; eine solche Zugbetriebseinrichtung ist bei führerlos betriebenen Zügen üblich, so dass lediglich ein Interface zwischen der Inspektionseinrichtung und der bordseitigen, automatischen Zugsicherungseinheit als neue Komponente in dem Inspektionszug vorzusehen ist. Ein weiterer Vorteil des erfindungsgemäßen Verfahrens liegt in der Flexibilität des Einsatzes des Inspektionszuges; so lässt sich der Inspektionszug nicht nur günstig in Betriebspausen einsetzen, sondern auch im laufenden Betrieb in den Fahrplan einpassen, weil er in der Regel eine recht geringe Bewegungspriorität hat. Auch kann der Inspektionszug nur abschnittsweise im Einsatz sein. Außerdem kann der Inspektionszug auf einem nicht genutzten Gleisabschnitt ohne Schwierigkeiten abgestellt werden, weil ein Personalzutritt nicht erforderlich ist. Ferner weist der Inspektionszug im Vergleich zu einem normalen führerlosen Zug eine erheblich leichtere Bauweise auf und kann daher seinen jeweiligen Startpunkt schneller erreichen und von dort auch mit einer höheren Geschwindigkeit starten.

Bei dem erfindungsgemäßen Verfahren können also nicht nur messungsunabhängige Bewegungen des Inspektionszugs komplett von der Streckenseite gesteuert werden können, sondern auch die Fahrzeugbewegungen, die in direktem sinnvollen Zusammenhang zur Messung stehen und in Abhängigkeit vom Messergebnis verändert werden können. Außerdem sind somit alle wesentlichen Daten für das Erkennen von Störungen erfassbar.

Vorteilhaft ist es ferner, wenn eine Auswertung der über die Kommunikationsverbindung laufenden Signale in der Operationszentrale vorgenommen wird. In diesem Falle kann von der Operationszentrale aus umgehend das Beseitigen einer Störung veranlasst werden.

Es kann bei dem erfindungsgemäßen verfahren auch vorteilhaft sein, eine Auswertung der über die Kommunikationsverbindung laufenden Signale mittels einer bordseitigen Auswerteanordnung des Inspektionszuges vorzunehmen, um beispielsweise vorher an die Operationszentrale übermittelte Daten von Störungen nochmals zu überprüfen.

Bei dem erfindungsgemäßen Verfahren kann der Inspektionszug in unterschiedlicher Weise zum Einsatz kommen. So ist es möglich, eine dritte Schiene eines Schienenstranges zur Stromversorgung zu inspizieren oder einen Fahrdraht zu untersuchen. Bei einer bevorzugten Ausführungsform des erfindungsgemäßen Verfahrens wird der Inspektionszug zum Erkennen von Schienenbrüchen verwendet. Dabei kann bei dem erfindungsgemäßen Verfahren eine Ultraschall-Messeinrichtung verwendet werden. Eine solche Messeinrichtung wird beispielsweise beim sog. Puls-Echo-Verfahren oder bei einem kontaktlosen, laserbasierten Ultraschall-Verfahren eingesetzt.

Bei einer anderen vorteilhaften Variante des erfindungsgemäßen Verfahrens wird zum Erkennen von Schienenbrüchen eine Messanordnung zum Erfassen von Beschleunigungen an Achslagern des Inspektionszuges verwendet, wie sie Gegenstand der eingangs behandelten Dissertation ist.

Die Erfindung bezieht sich ferner auf eine Anordnung zum Erkennen von Störungen in einem automatischen Zugverkehrssystem mit einer Operationszentrale und führerlos betriebenen Zügen mittels einer Inspektionseinrichtung in mindestens einem weiteren Zug, zu welcher eine außen an dem weiteren Zug angebrachte Messeinheit gehört, welche eine Messung ausführt. Bekannt ist eine derartige Anordnung aus der eingangs angegebenen Dissertation. Die Erfindung stellt sich die Aufgabe, eine Anordnung dieser Art so auszubilden, dass mit ihr bei einem automatischen Zugverkehrssystem ein zuverlässiges Erkennen von Störungen an einem Schienenstrang mit vergleichsweise geringem Aufwand ermöglicht ist.

Zur Lösung dieser Aufgabe ist erfindungsgemäß : mindestens eine weitere Zug ein führerlos betriebener Inspektionszug mit einer bordseitigen Zugbetriebseinrichtung mit einer automatischen Fahrbetriebseinheit und einer automatischen Zugsicherungseinheit, dessen Fahrzeugbewegungen, welche in direktem Zusammenhang mit der Messung stehen, in Abhängigkeit vom Messergebnis verändert werden, und es ist über ein Interface eine Kommunikationsverbindung zwischen der automatischen Zugsicherungseinheit und der Inspektionseinrichtung vorhanden. Dabei ist die Kommunikationsverbindung dazu ausgebildet, Aktivierungssignale für die Inspektionseinrichtung, Statussignale und Orts- und Geschwindigkeitssignale auszutauschen und die Operationszentrale ist dazu ausgebildet, bei einer erkannten Störung den Inspektionszug mit Kommandos erneut zur Position der erkannten Störung zu schicken und eine neue Messung zu veranlassen.

Bei der erfindungsgemäßen Anordnung ergeben sich sinngemäß die gleichen Vorteile, wie sie oben zum erfindungsgemäßen Verfahren angegeben sind.

Dabei kann die Kommunikationsverbindung zwischen der Inspektionseinrichtung und der automatischen Zugsicherungseinheit beispielsweise über Funk bis zur Operationszentrale verlängert werden, die eine Auswerteeinheit aufweist, mit der eine Auswertung der von der Inspektionseinrichtung über die Kommunikationsverbindung und deren Verlängerung laufenden Signale vorgenommen werden kann.

Es ist bei der erfindungsgemäßen Anordnung auch möglich, eine eine bordseitige Auswerteanordnung des Inspektionszuges vorzusehen ist, um eine Auswertung der über die Kommunikationsverbindung laufenden Signale vorzunehmen.

Bei dem erfindungsgemäßen Verfahren kann der Inspektionszug bei verschieden Störungen zum Einsatz kommen. So ist es möglich, bei einem Schienenstrang mit einer dritten Schiene zur Stromversorgung diese zu inspizieren oder einen Fahrdraht zu untersuchen.

Als vorteilhaft wird es ferner angesehen, wenn der Inspektionszug als Inspektionseinrichtung eine Schienenbruch-Erfassungseinrichtung in Form einer Ultraschall-Messeinrichtung aufweist. Außerdem kann die Schienenbruch-Erfassungseinrichtung eine Messanordnung zum Erfassen von Beschleunigungen an Achslagern des Inspektionszuges sein.

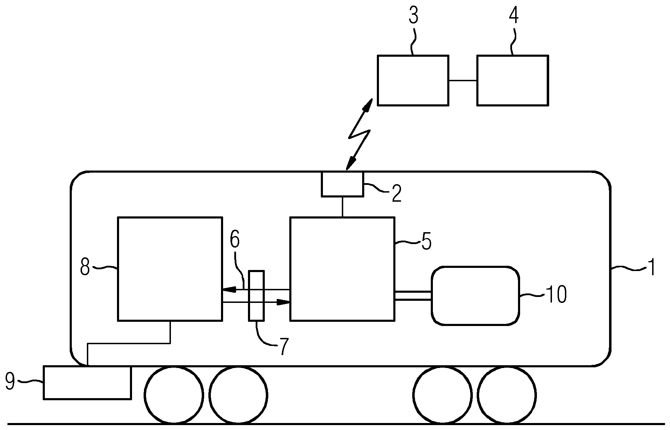

Zur weiteren Erläuterung der Erfindung ist in der Figur ein Ausführungsbeispiel einer erfindungsgemäßen Anordnung zum Erkennen von Störungen durch einen Schienenbruch dargestellt. In der Figur ist schematisch ein Inspektionszug 1 gezeigt, der über eine Funkverbindung 2 mit einer streckenseitigen, automatischen Fahrbetriebseinrichtung 3 kommunikativ verbunden ist, die in der Fachsprache auch als streckenseitige, automatische Zugsicherung ATP bezeichnet wird. Der streckenseitigen Fahrbetriebseinrichtung 3 ist eine Operationszentrale 4 nachgeordnet, die auch kurz mit OCC bezeichnet wird.

Innerhalb des Inspektionszuges 1 ist eine bordseitige Zugbetriebseinrichtung 5 untergebracht, die eine nicht im Einzelnen gezeigte automatische Fahrbetriebseinheit - auch kurz mit bordseitigem, automatischem Fahrbetrieb ATO bezeichnet - und eine automatische Zugsicherungseinheit enthält, die auch kurz mit bordseitiger, automatischer Zugsicherung ATP bezeichnet wird. Die Zugbetriebseinrichtung 5 ist mit der Funkverbindung 2 verbunden. Die bordseitige Zugsicherungseinheit der Zugbetriebseinrichtung 5 ist über eine Kommunikationsverbindung 6 mit einem Interface 7 mit einer Inspektionseinrichtung 8 verbunden, bei der es sich um eine Anordnung zum Erkennen von Schienenbrüchen handeln kann. Dazu gehört eine mit Messinstrumenten und Sensoren ausgerüstete Messeinheit 9, die außen am Inspektionszug 1 angebracht ist.

Außerdem ist an die Zugbetriebseinrichtung 5 eine Einrichtung 10 zur Geschwindigkeitsregelung des Inspektionszuges angeschlossen, die auf Vorgaben der Einrichtung 5 den Antrieb und die Bremse des Inspektionszugs steuert.

Der Inspektionszug 1 wird von der Operationszentrale 4 automatisch durch nicht gezeigte Aktivierungssignale gesteuert und verkehrt dabei unter Berücksichtigung der Fahrpläne des normalen Zugverkehrs so, dass keine Beeinträchtigungen des Zugbetriebs (z.B. mit Fahrgastzügen) eintreten. Dabei erfolgt die Geschwindigkeit des Inspektionszuges 1 in einer Weise, wie es durch die Arbeitsweise der Messeinheit 9 vorgegeben ist. Bei einer erkannten Störung (z.B. Schienenbruch) werden die Position und die Streckendaten am Ort des Schienenbruchs selbsttätig erfasst sowie die jeweils gefahrene Geschwindigkeit. Statussignale des Inspektionszuges 1 werden dabei ständig an die Operationszentrale 4 übermittelt. Insbesondere werden bei einer erkannten Störung Daten an die Operationszentrale 4 übermittelt. Diese kann anschließend das Fahrzeug (je nach Betriebslage) mit Kommandos über die Fahrbetriebseinrichtung 3 und die Zugbetriebeinrichtung 5 erneut zur Position der erkannten Störung schicken und eine erneute Messung, z.B. mit langsamerer Geschwindigkeit, veranlassen.

## Patentansprüche

1. Verfahren zum Erkennen von Störungen an einem Schienenstrang in einem automatischen Zugverkehrssystem mit einer Operationszentrale (4) und führerlos betriebenen Zügen mittels einer Inspektionseinrichtung (8) in mindestens einem weiteren Zug (1), zu welcher eine außen an dem weiteren Zug angebrachte Messeinheit (9) gehört, welche eine Messung ausführt und ein Messergebnis ermittelt,
wobei als der mindestens eine weitere Zug ein führerlos betriebener Inspektionszug (1) mit einer bordseitigen Zugbetriebseinrichtung (5) mit einer automatischen Fahrbetriebseinheit und einer automatischen Zugsicherungseinheit verwendet wird, dessen Fahrzeugbewegungen, welche in direktem Zusammenhang mit der Messung stehen, in Abhängigkeit vom Messergebnis verändert werden, und
über ein Interface (7) eine Kommunikationsverbindung (6) zwischen der automatischen Zugsicherungseinheit und der Inspektionseinrichtung (8) betrieben wird,
wobei über die Kommunikationsverbindung (6) Aktivierungssignale für die Inspektionseinrichtung (8) , Statussignale und Orts- und Geschwindigkeitssignale ausgetauscht werden und
wobei die Operationszentrale (4) bei einer erkannten Störung an dem Schienenstrang den Inspektionszug (1) mit Kommandos erneut zur Position der erkannten Störung schickt und eine neue Messung veranlasst.

2. Verfahren nach Anspruch 1,
wobei eine Auswertung der über die Kommunikationsverbindung (6) laufenden Signale in der Operationszentrale (4) vorgenommen wird.

3. Verfahren nach einem der Ansprüche 1 oder 2,
wobei eine Auswertung der über die Kommunikationsverbindung (6) laufenden Signale mittels einer bordseitigen Auswerteanordnung des Inspektionszuges (1) vorgenommen wird.

4. Verfahren nach einem der vorangehenden Ansprüche,
wobei der Inspektionszug (1) zum Erkennen von Schienenbrüchen eingesetzt wird.

5. Verfahren nach Anspruch 4,
wobei zum Erkennen der Schienenbrüche eine Ultraschall-Messeinrichtung verwendet wird.

6. Verfahren nach einem der Ansprüche 1 bis 4,
wobei zum Erkennen der Schienenbrüche eine Messanordnung zum Erfassen von Beschleunigungen an Achslagern des Inspektionszuges verwendet wird.

7. Anordnung zum Erkennen von Störungen an einem Schienenstrang in einem automatischen Zugverkehrssystem mit einer Operationszentrale (4) und führerlos betriebenen Zügen mittels einer Inspektionseinrichtung (8) in mindestens einem weiteren Zug (1), zu welcher eine außen an dem weiteren Zug angebrachte Messeinheit (9) gehört, welche eine Messung ausführt,
wobei der mindestens eine weitere Zug ein führerlos betriebener Inspektionszug (1) mit der Inspektionseinrichtung 2. (8) sowie einer bordseitigen Zugbetriebseinrichtung (5) mit einer automatischen Fahrbetriebseinheit und einer automatischen Zugsicherungseinheit ist, dessen Fahrzeugbewegungen, welche in direktem Zusammenhang mit der Messung stehen, in Abhängigkeit vom Messergebnis verändert werden, und
über ein Interface (7) eine Kommunikationsverbindung (6) zwischen der automatischen Zugsicherungseinheit und der Inspektionseinrichtung (8) vorhanden ist,
wobei die Kommunikationsverbindung (6) dazu ausgebildet ist, Aktivierungssignale für die Inspektionseinrichtung (8) , Statussignale und Orts- und Geschwindigkeitssignale auszutauschen und
wobei die Operationszentrale (4) dazu ausgebildet ist, bei einer erkannten Störung an dem Schienenstrang den Inspektionszug (1) mit Kommandos erneut zur Position der erkannten Störung zu schicken und eine neue Messung zu veranlassen.

8. Anordnung nach Anspruch 7, wobei eine Auswerteeinheit in der Operationszentrale (4) dazu ist, eine Auswertung der über die Kommunikationsverbindung (6) laufenden Signale vorzunehmen.

9. Anordnung nach einem der Ansprüche 7 oder 8,
wobei eine bordseitige Auswerteanordnung des Inspektionszuges (1) dazu ausgebildet ist, eine Auswertung der von der Inspektionseinrichtung (8) über die Kommunikationsverbindung laufenden Signale auszuwerten.

10. Anordnung nach einem der Ansprüche 7 bis 9,
wobei der Inspektionszug (1) als Inspektionseinrichtung eine Schienenbruch-Erfassungseinrichtung in Form einer Ultraschall-Messeinrichtung aufweist.

11. Anordnung nach einem der Ansprüche 7 bis 9,
wobei der Inspektionszug (1) als Inspektionseinrichtung eine Schienenbruch-Erfassungseinrichtung in Form einer Messanordnung zum Erfassen von Beschleunigungen an Achslagern des Inspektionszuges aufweist.

## Claims

1. Method for identifying faults on a section of track in an automatic rail traffic system with an operation centre (4) and trains operated without drivers, by means of an inspection facility (8) in at least one further train (1), to which a measurement unit (9) belongs which is attached to the outside of the further train and carries out a measurement and ascertains a measurement result,
wherein used as the at least one further train is an inspection train (1) operated without a driver with an onboard train operation facility (5) with an automatic travel operation unit and an automatic train protection unit, of which the vehicle movements, which are directly related to the measurement, are modified as a function of the measurement result, and
a communication connection (6) between the automatic train protection unit and the inspection facility (8) is operated via an interface (7),
wherein activation signals for the inspection facility (8), status signals and location and speed signals are exchanged via the communication connection (6) and
wherein the operation centre (4), in the event of an identified fault on the section of track, uses commands to send the inspection train (1) to the position of the identified fault once again and prompts a new measurement.

2. Method according to claim 1,
wherein an evaluation of the signals running via the communication connection (6) is undertaken in the operation centre (4).

3. Method according to one of claims 1 or 2,
wherein an evaluation of the signals running via the communication connection (6) is undertaken by means of an onboard evaluation arrangement of the inspection train (1).

4. Method according to one of the preceding claims,
wherein the inspection train (1) is used to identify rail breakages.

5. Method according to claim 4,
wherein an ultrasonic measurement facility is used to identify the rail breakages.

6. Method according to one of claims 1 to 4,
wherein a measurement arrangement for detecting accelerations on axle bearings of the inspection train is used to identify the rail breakages.

7. Arrangement for identifying faults on a section of track in an automatic rail traffic system with an operation centre (4) and trains operated without drivers, by means of an inspection facility (8) in at least one further train (1), to which a measurement unit (9) belongs which is attached to the outside of the further train and carries out a measurement,
wherein the at least one further train is an inspection train (1) operated without a driver with the inspection facility (8) as well as an onboard train operation facility (5) with an automatic travel operation unit and an automatic train protection unit, of which the vehicle movements, which are directly related to the measurement, are modified as a function of the measurement result, and
a communication connection (6) between the automatic train protection unit and the inspection facility (8) is present via an interface (7),
wherein the communication connection (6) is embodied to exchange activation signals for the inspection facility (8), status signals and location and speed signals and
wherein the operation centre (4) is embodied, in the event of an identified fault on the section of track, to use commands to send the inspection train (1) to the position of the identified fault once again and to prompt a new measurement.

8. Arrangement according to claim 7,
wherein an evaluation unit in the operation centre (4) is embodied to undertake an evaluation of the signals running via the communication connection (6).

9. Arrangement according to one of claims 7 or 8,
wherein an onboard evaluation arrangement of the inspection train (1) is embodied to evaluate an evaluation of the signals running from the inspection facility (8) via the communication connection.

10. Arrangement according to one of claims 7 to 9,
wherein the inspection train (1) has, as inspection facility, a rail breakage detection facility in the form of an ultrasonic measurement facility.

11. Arrangement according to one of claims 7 to 9,
wherein the inspection train (1) has, as inspection facility, a rail breakage detection facility in the form of a measurement arrangement for detecting accelerations on axle bearings of the inspection train.

## Revendications

1. Procédé de détection de perturbations sur une file de rails dans un système automatique de circulation de trains, comprenant une centrale (4) d'opération et des trains fonctionnant sans conducteur au moyen d'un dispositif (8) d'inspection dans au moins un autre train (1), dispositif (8) auquel appartient une unité (9) de mesure, qui est mise à l'extérieur sur l'autre train, qui effectue une mesure et détermine un résultat de mesure,
dans lequel
on utilise comme le au moins un autre train, un train (1) d'inspection fonctionnant sans conducteur ayant un dispositif (5) de conduite automatique des trains à bord, ayant une unité automatique de conduite de circulation et une unité d'arrêt automatique des trains, dont les mouvements de véhicule, qui sont en relation directe avec la mesure, sont modifiés en fonction du résultat de la mesure, et
par une interface (7) ont fait fonctionner une liaison (6) de communication entre l'unité d'arrêt d'automatique des trains et le dispositif (8) d'inspection,
dans lequel
par la liaison (6) de communication on échange des signaux d'activation du dispositif (8) d'inspection, des signaux de statut et des signaux de localisation et de vitesse et dans lequel, la centrale (4) d'opération, lorsqu'elle détecte une perturbation sur la file de trains, donne au train (1) d'inspection à nouveau des instructions pour la position de la perturbation détectée et provoque une mesure nouvelle.

2. Procédé suivant la revendication 1,
dans lequel,
on effectue dans la centrale (4) d'opération, une exploitation des signaux passant par la liaison (6) de communication.

3. Procédé suivant l'une quelconque des revendications 1 ou 2,
dans lequel
On effectue une exploitation des signaux passant par la liaison (6) de communication au moyen d'un agencement d'exploitation à bord du train (1) d'inspection.

4. Procédé suivant l'une quelconque des revendications précédentes,
dans lequel
on utilise le train (1) d'inspection pour la détection de ruptures de rail.

5. Procédé suivant la revendication 4,
dans lequel
on utilise un dispositif de mesure par ultrasons pour la détection de ruptures de rail.

6. Procédé suivant l'une quelconque des revendications 1 à 4,
dans lequel
on utilise pour la détection de ruptures de rail un agencement de mesure pour le relevé d'accélérations sur des boîtes d'essieu du train d'inspection.

7. Agencement de détection de perturbations sur une file de rails dans un système automatique de circulation de trains comprenant une centrale (4) d'opération et des trains fonctionnant sans conducteur au moyen d'un dispositif (8) d'inspection dans au moins un autre train (1), dispositif (8) auquel appartient une unité (9) de mesure, qui est mise à l'extérieur sur l'autre train, qui effectue une mesure,
dans lequel
le au moins un autre train est un train (1) d'inspection fonctionnant sans conducteur, ayant un dispositif (5) de conduite automatique des trains à bord, ayant une unité automatique de conduite de circulation et une unité d'arrêt automatique des trains, dont les mouvements de véhicule, qui sont en relation directe avec la mesure, sont modifiés en fonction du résultat de la mesure, et
par une interface (7) il y a une liaison (6) de communication entre l'unité d'arrêt automatique des trains et le dispositif (8) d'inspection,
dans lequel
la liaison (6) de communication est constituée pour échanger des signaux d'activation du dispositif (8) d'inspection, des signaux de statut et des signaux de localisation et de vitesse et dans lequel la centrale (4) d'opération est constituée pour, lorsqu'une perturbation est détectée sur la file de rails, donner au train (1) d'inspection des instructions à nouveau pour la position de la perturbation détectée et provoquer une mesure nouvelle.

8. Agencement suivant la revendication 7,
dans lequel
une unité d'exploitation de la centrale (4) d'opération est constituée pour effectuer une exploitation des signaux passant par la liaison (6) de communication.

9. Agencement suivant l'une quelconque des revendications 7 ou 8,
dans lequel
un agencement d'exploitation à bord du train (1) d'inspection est constitué pour exploiter par le dispositif (8) d'inspection des signaux passant par la liaison de communication.

10. Agencement suivant l'une quelconque des revendications 7 à 9,
**caractérisé en ce que**
le train (1) d'inspection a comme dispositif d'inspection un dispositif de détection de rupture de rail sous la forme d'un dispositif de mesure par ultrasons.

11. Agencement suivant l'une quelconque des revendications 7 à 9,
dans lequel
le train (1) d'inspection a comme dispositif d'inspection un dispositif de détection de rupture de rail sous la forme d'un agencement de mesure pour la détection d'accélérations sur des boîtes d'essieu du train d'inspection.
